# EUROPEAN PATENT APPLICATION

(11) **EP 1 772 830 A2**
(43) Date of publication of application: **11.04.2007**
(21) Application number: 06021036.6
(22) Date of filing: 06.10.2006
(51) Int. Cl.: G07B 17/00

(54) **System and method for processing and mailing digital media**

(30) Priority: 07.10.2005 US 246884
(71) Applicant: PITNEY BOWES INC., Stamford, CT 06926-0700 (US)
(72) Inventor: Rosenkranz, Thomas H., Dover Plains New York 12522 (US); Holbrook, Russel W., Southbury Connecticut 06448 (US); Most, Egbert E., Southbury Connecticut 06488 (US)
(74) Representative: HOFFMANN EITLE

(57) **Abstract**

In a system and method for preparing digital media for delivery, outgoing digital media (108) are automatedly inserted into empty digital media envelopes. A scanner scans a code on the digital media. Based on the code, the system determines an intended delivery address. The system applies delivery address information, as determined from the scanned code, to the filled envelopes. The method and system may also include steps and components for receiving and sorting incoming digital media. Incoming digital media (102) are sorted to determine which (107) are to be re-used as outgoing digital media for the outgoing aspect of the system. Incoming digital media (102) are scanned to identify senders. The system identifies what new digital media the sender would like to receive in place of the returned digital media. It is determined which received digital media can be re-used to satisfy outgoing requests. The requested outgoing digital media (107) are sorted from the incoming digital media (102).

## Description

The present invention relates to a system for processing, distributing, and redistributing digital media disks by mail.

The development of the Digital Versatile Disc ("DVD") as a medium for carrying digital movie and video information has led to a new rental business models that use postal mail for media transport. For example, U.S. Patent 6,584,450, Method and Apparatus for Renting items, describes a DVD rental service in which a subscriber establishes an online "pick list" of DVD movies that the subscriber wishes to rent. In addition to DVD's such a service may be used to provide video game disks, CD's, CD-ROM's, or any other optical media. When a selected one of the DVD movies on the pick list becomes available in inventory, the service mails the selected DVD movie to the subscriber. The subscriber views the DVD and returns it to the service by mail. When the DVD is received by the service, the subscriber is entitled to receive another available DVD from the pick list.

In the conventional service, much of the work in receiving returned DVD's and sending out new DVD's to customers is done manually. For example, an envelope containing a returned DVD is opened by hand by workers employed by the service. The worker manually scans a code on the DVD packaging to identify the returned DVD and the customer. Some of the returned DVD's will be returned to inventory, however many of the returned DVD's will need to be sent to other customers. The returned DVD's are then manually processed again to determine which are need to be resent to customers, and which should be kept for internal storage or processing. Finally, outgoing DVD's are manually inserted into conventional mailers to be placed for outgoing delivery with the postal or delivery service. To maintain customer satisfaction, rapid processing of these incoming and outgoing DVD's is critical. The extensive manual processing of returned and outgoing DVD's can be time that makes quick and reliable turn-around more difficult.

The present invention overcomes disadvantage of the conventional methods and systems by providing a new system and method for preparing digital media for delivery.

In a first aspect of the invention, outgoing digital media are prepared for delivery to recipients. The system has determined which digital media need to be delivered to customers. Those outgoing digital media items are collected and provided to an outbound processing device to be prepared for delivery. Empty digital media envelopes are also supplied to the outbound processing device. The automated device inserts the outgoing digital media into the empty envelopes.

A scanner scans a code on the digital media. Based on the code, the system determines an intended delivery address. The system applies delivery address information, as determined from the scanned code, to the filled envelopes. In one embodiment, the step of applying delivery address information includes printing the delivery address on a label, and applying the printed label to the envelope.

Preferably, the envelopes include at least one opening, wherein a business reply portion of the envelope is exposed through the opening. The step of applying delivery address information may include printing a return address on the business reply portion of the address. The printed return address may be selected based on the code scanned.

In another embodiment, the envelopes include at least one opening allowing visibility access to media inserted in the envelopes. In this embodiment the step of scanning is after the step of inserting, and scanning occurs through the opening in the envelope.

In a second major aspect of the invention, in addition to preparing outgoing digital media, the method and system includes steps and components for receiving and sorting incoming digital media. Digital media that has been returned from customers may be needed to satisfy outgoing mailings to satisfy demands of other customer.

Incoming sorting equipment separates incoming digital media that are needed for use as outgoing digital media for the outgoing aspect of the system. Incoming digital media are fed and scanned to read the code on the incoming digital media. The incoming scanning allows senders of the incoming digital media to be identified. Preferably, the step of scanning the incoming digital media may include scanning though a window in the envelope, without opening the envelope.

Under a business model for use with the present invention, someone who has returned an item of digital media is entitled to receive a different one in its place. Accordingly, the system identifies an outgoing digital media to be sent to the sender of the returned digital media. Thus, it is determined which of the incoming digital media can be used to serve as outgoing digital media to satisfy individual customer requests. Outgoing digital media are thus automatically sorted from the incoming digital media. The sorted outgoing digital media is supplied to the processing equipment that prepares outgoing digital media.

Another preferred feature of the system is an inventory. Incoming digital media that are not identified as requested outgoing digital media are placed in inventory. Inventory is also used to provide additional outgoing digital media where incoming digital media cannot satisfy all outgoing demands.

Further details of the present invention are provided in the accompanying drawings, detailed description, and claims.

Figure 1A and 1B depict an exemplary back sheet for forming a two-way mailer.

Figure 2 depicts an exemplary middle sheet for forming a two-way mailer.

Figure 3 depicts the combination of the exemplary back and middle sheets for forming a two-way mailer.

Figure 4 depicts the combination of Figure 3 with the addition of a removable top sheet.

Figure 5 depicts an exemplary front and back of a sleeve for holding digital media disks.

Figures 6-7 depicts alternative arrangements for forming two-way mailers.

Figures 8A-8D depict components and finished assembly of one of the alternative arrangements.

Figures 9A and 9B depict an exemplary return portion of the mailer with the digital media sleeve enclosed.

Figure 10 depicts a distribution center and system for processing DVD's for mailing.

Figure 11 depicts steps in a process for processing DVD's in the distribution center of Fig. 10.

Figures 12A and 12B depict an exemplary sorter machine for use with the DVD processing system.

Figure 13 depicts an exemplary inserter machine for use with the DVD processing system.

Figure 14 depicts an alternative inserter machine for use with the DVD processing system.

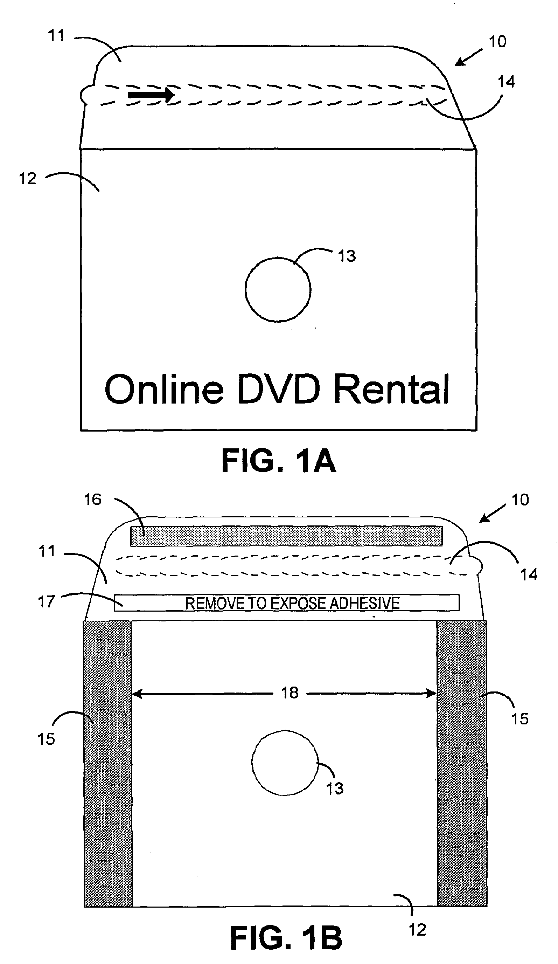

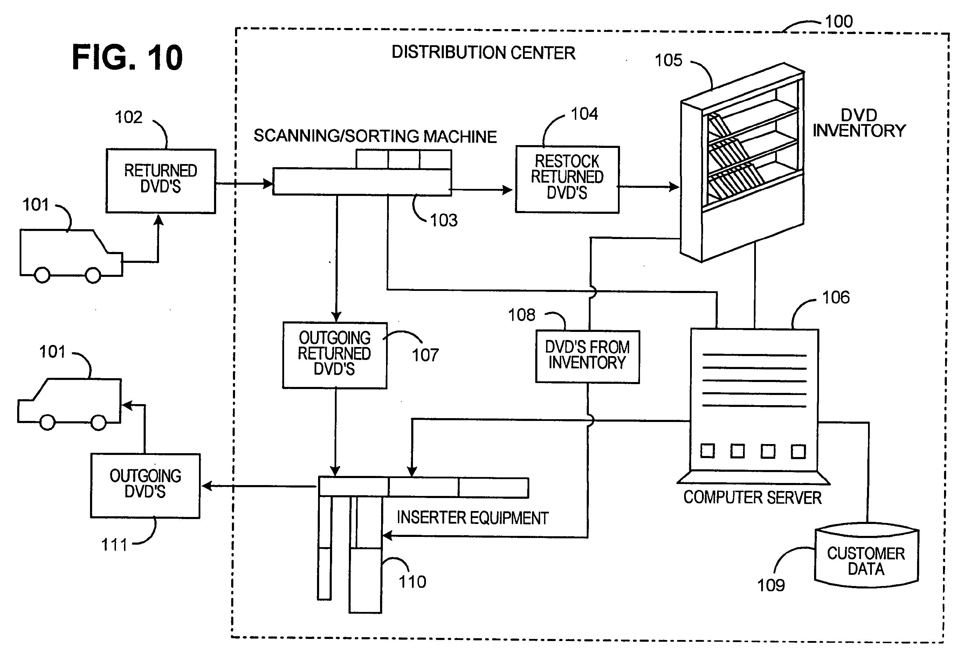

In Figs. 1-9, a digital media mailer envelope is described for use with the present invention. This digital media mailer envelope is the preferred, but optional, packaging for use with digital media that are processed in accordance with the methods and equipment depicted in Figs. 10-14.

The preferred embodiment of the digital media mailer is composed of three sheets fastened on top of one another in three layers. While the preferred embodiment uses separate and distinct sheets for its layers, the term "sheets" should also be understood to mean parts of a single sheet that have been folded to form the layers that comprise the mailer.

In this application, certain elements of the two-way mailer may be relevant for different stages in the use of the mailer. These stages will be referred to as "initial" or "outgoing" stage for the delivery of the media from the service to the customer. A "return" or "incoming" stage refers to the part of the process when the customer is returning the digital media to the service. Certain features are directed to assisting to quickly transition a DVD from an incoming stage from one customer, to an outgoing stage for another customer.

Figs. 1 A and 1 B depict a back sheet 10 that forms a base for constructing the two-way mailer. Fig. 1 A shows a rear view of the back sheet 10. The back surface shown in Fig. 1A will be the back side of the envelope for both the outgoing and return mail pieces. Fig. 1 B is the interior side of back sheet 10. This interior side will form part of the pocket for holding the digital media.

Back sheet 10 includes the flap 11 used for sealing the mailer. On flap 11 adhesive 16 is used to seal the flap closed upon outgoing delivery. Perforated strip 14 is torn by the digital media recipient in order to open the sealed flap 11 to remove the digital media. For resealing, a covered adhesive 17 is provided. When the recipient wishes to reseal and return the mailer, a non-adhesive covering is removed from adhesive 17 and the flap 11 may be sealed again (with the upper portion of flap 11 gone from the prior opening process).

The body 12 of back sheet 10 includes a circular opening 13. Opening 13 is a hole in the sheet positioned to be in the center of the pocket region in which the digital media will be placed during outgoing and return delivery. Opening 13 viewing access to a digital media sleeve 50 from the rear side of the envelope for both outgoing and return mail pieces. A circular shaped opening is preferred because that shape is less likely to catch in postal processing equipment. However, any alternative shape may suffice.

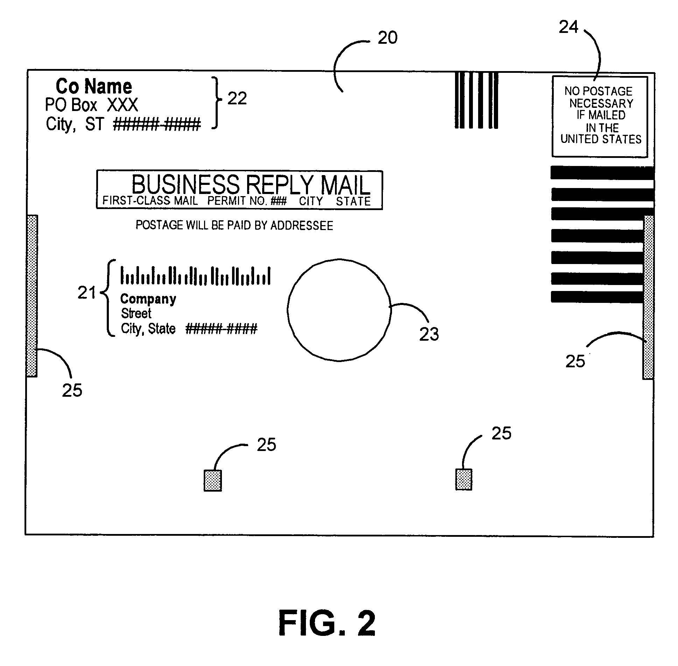

Adhesive regions 15 along the left and right sides of back sheet body 12 are used to attach the middle sheet 20 (Fig. 2) to the back sheet 10. In between the adhesive regions 15, a pocket region 18 will be formed for holding the digital media. Accordingly, it will be important to carefully dimension the adhesive regions 15 to achieve the desired pocket region. It will be understood that the glue regions 15 may be correspondingly placed on middle sheet 20, and still have the same structural result.

Preferred dimensions for the back sheet 10 are as follows: back sheet body 12 is 7.5" x 5.5"; flap 11 extends 2" from body 12; and opening 13 is 1.2" in diameter. The adhesive regions 15 are 1" wide, and the pocket region is 5.75" inches wide.

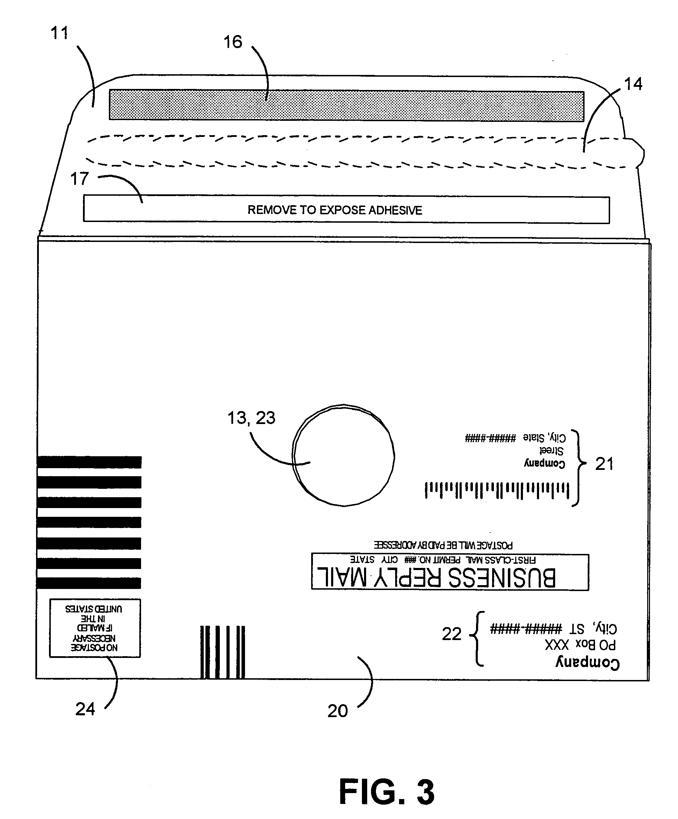

Middle sheet 20, depicted in Fig. 2, fits directly over the body 12 of back sheet 10, and has the same measurements. In a preferred embodiment the middle sheet 20 is placed upside down on the back sheet 10, so that when the flap 11 eventually closes it will not cover the return address 22 or postal markings 24. This combination of the back sheet 10 and middle sheet 20 is depicted in Fig. 3.

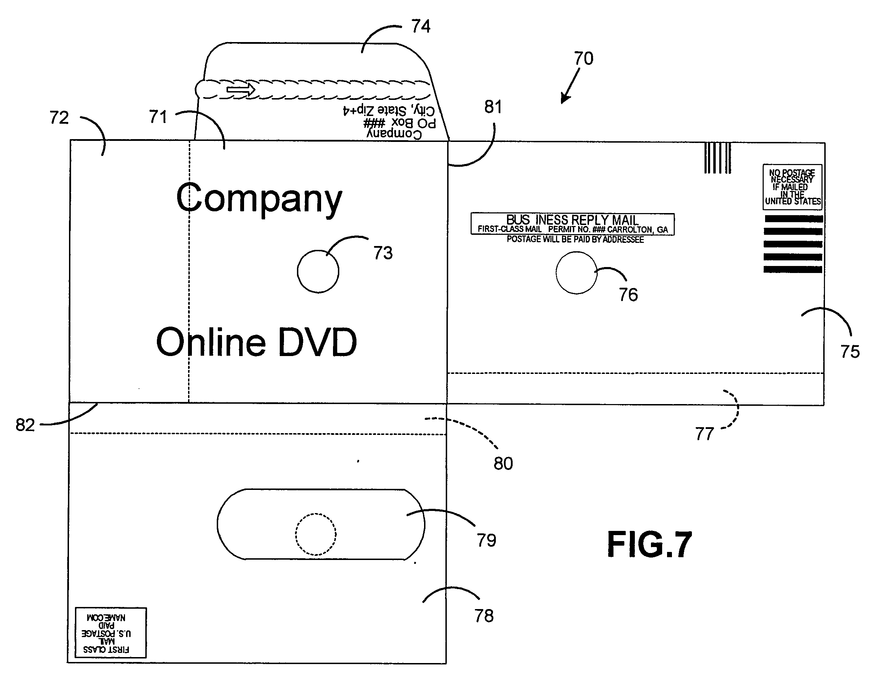

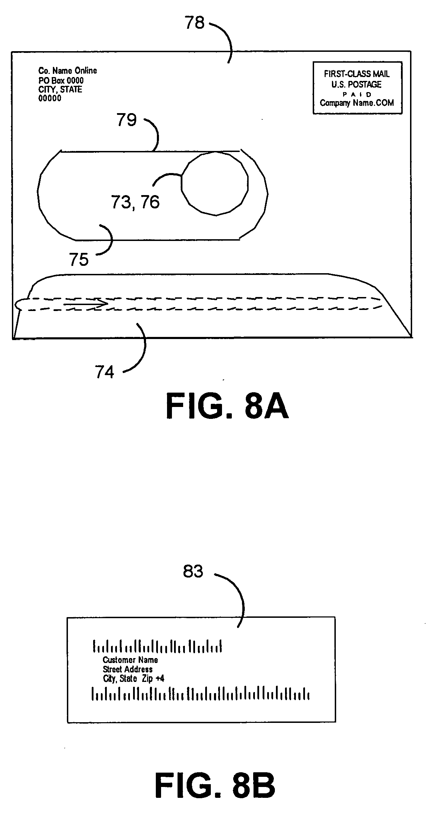

Middle sheet 20 also includes a return destination address 21, indicating where the digital media will be delivered upon return from the customer. In a first embodiment, the return destination address 21 is preprinted on middle sheet 20 prior to assembly in the mailer. Alternatively, for use in an embodiment such as depicted in Figs. 7 and 8A-D, the return destination address 21 may initially be blank. Middle sheet opening 23 is the same size, and aligns with, back sheet opening 13. When middle sheet 20 is fastened on top of back sheet 10 a pocket region 18 is formed, and through openings 13 and 23 the contents of pocket region 18 may be viewed both from the front and back.

For attaching a top sheet 40 to the middle sheet 20, adhesive areas 25 are placed on the middle sheet 20. Adhesive areas 25 are preferably small as compared to adhesive regions 15. The reason for small adhesive areas 25 is so that a user will be able to easily remove the top sheet 40 when it is time to use the return portion of the mailer. Accordingly, a plurality of small adhesive areas 25 is preferred, as opposed to fewer and larger areas.

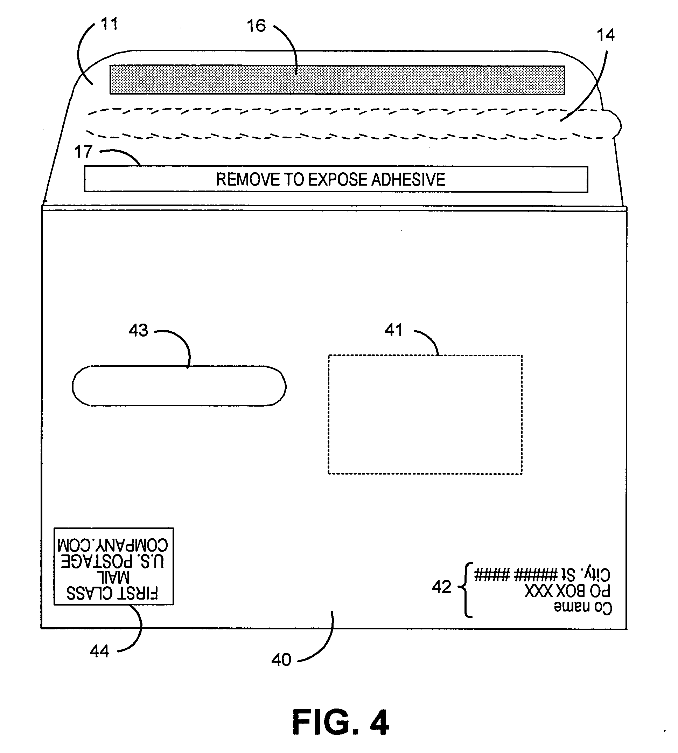

Fig. 4 depicts a top sheet 40 fastened on top of the middle sheet 20. In the preferred embodiment, the delivery address region 41 is initially blank. Only after the digital media has been inserted in the mailer, the delivery address region is filled in with a customer delivery address. Return address 42 and postage markings 44 may be pre-printed, but may also be printed after the mailer is filled. Top sheet 40 also includes an opening 43 to allow scanning of information on the middle sheet 20.

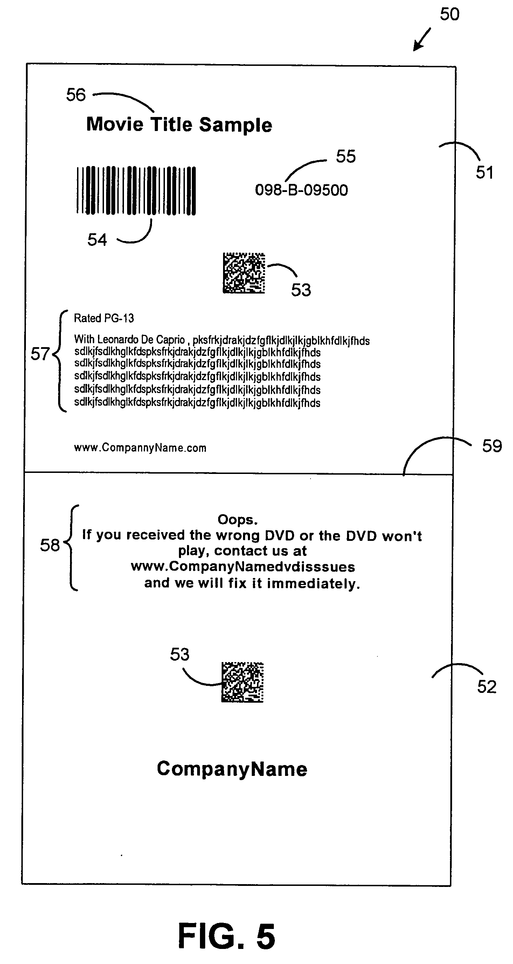

Fig. 5 depicts a digital media sleeve 50 having a front face 51 and a back face 52. In this particular example, the sleeve is comprised of a single sheet separated by a folding line 59. It will be understood that any configuration of sleeve will suffice, so long as it fits in the pocket region 18. An important feature of the sleeve 50 is the 2-D barcode 53 preferably positioned in the center of each side of the sleeve 50. Barcode 53 is preferably ½ inch square. This barcode 53 includes an identification of the content of the digital media contained in the sleeve 50, for example the DVD movie title, or a serial number for a particular copy of the DVD. Such information may also be included in supplementary 1-D barcode 54 or plain text code 55. The sleeve 50 further preferably includes a plain text title 56 for the media content, along with detailed descriptions 57 and instruction messages 58.

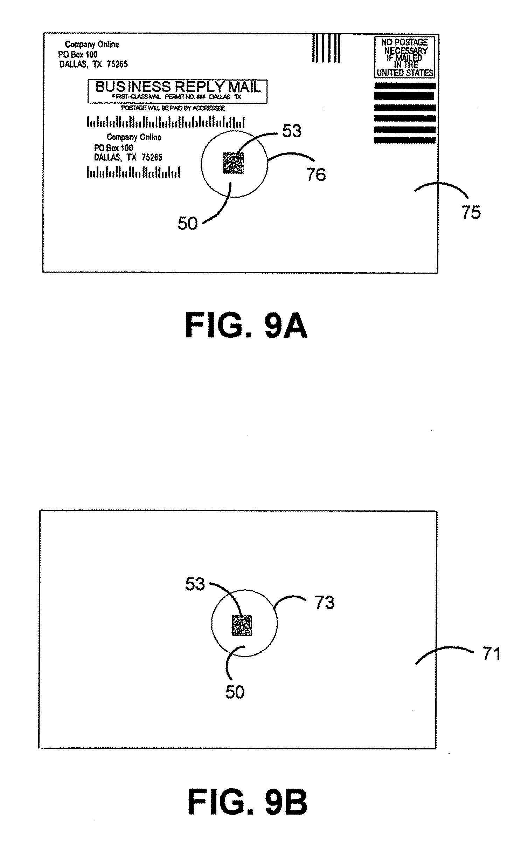

By positioning the barcode 53 in the center faces of generally square sleeve 50, and by positioning the openings 13 and 23 generally in the center of the pocket region 18 between the back and middle sheets 10 and 20, it is assured that the barcodes 53 can be easily scanned for outgoing and incoming pieces, without opening the mailer. As a result, more streamlined processes may be applied by a rental service for incoming mail whereby time critical DVD's can be identified sooner, without the need to open the pieces. Also, for outgoing pieces, automated processes for inserting and addressing DVD's can be controlled by scanning of the sleeve barcode 53. Figs. 9A and 9B show an exemplary return portion of a two-way mailer, with the sleeve barcode 53 showing through openings 73 and 76.

It should be understood the requirement of placing the barcode 53, or openings 13 and 23, in their respective center positions on the sleeve 50 or pocket region 18 does not require a strict geometrically calculated center. Rather, the size of the openings 13 and 23 and the smaller size of the barcode 53 may allow for a margin of error in placement such that they may be considered centered for purposes of this invention. What matters most is that the barcode 53 be visible through the openings 13 and 23, regardless of the orientation of how the sleeve 50 is placed in the pocket.

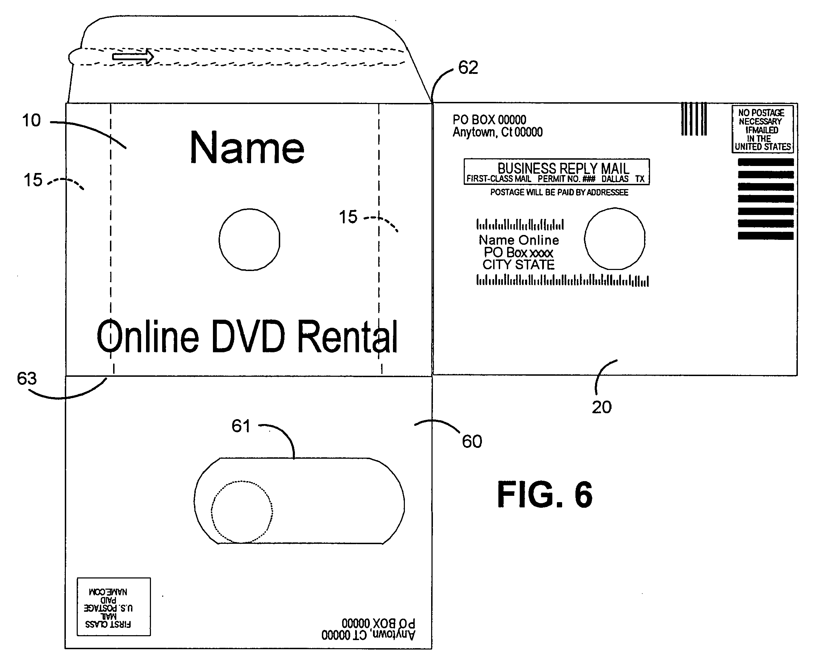

Fig. 6 depicts an alternative embodiment for constructing the mailer, having two main differences from what was described previously. First, the sheets 10, 20 and 60 forming the mailer are formed from a single sheet. In this arrangement, middle sheet 20 would first be folded along line 62 to be fixed along the adhesive regions 15 of the back sheet 10. Then, top sheet 60 could be folded along fold line 63 to be affixed on top of the middle sheet 20. Line 63 may be perforated to facilitate removal of top sheet 60 prior to sending the return mail piece.

Alternatively, sheet 20 be switched with sheet 60, so that the top of middle sheet 20 is along fold line 63, while the edge of top sheet 60 is along fold line 62. As another acceptable variation, sheets 10 and 20 may be formed from a single sheet, while top sheet 60 is formed from a separate sheet.

The other structural difference depicted in Fig. 6 is the placement of opening 61. Top sheet opening 61, when folded over middle sheet 20 allows access to the opening 23 and to the return address destination region 21. By exposing the return address destination region 21, it is possible scan the sleeve barcode 53 and to print a unique return address in the return address destination 21 while the mailer is being assembled, and after the media is inserted. This arrangement is discussed further below in connection with Figs. 8A-D.

Fig. 7 depicts another alternative embodiment for assembly of the two-way mailer. The distinguishing feature of this embodiment is that the pocket region not centered in the mailer, but is instead towards the side away from the postage markings. That side is chosen because the side with the postage markings is typically the lead edge for postal service handling equipment, and positioning the media towards a trailing edge is better for protecting the media from being damaged.

Accordingly, middle sheet 75 with opening 76 is folded along line 81 to be fixed on top of back sheet 71. Glue regions 72 and 77 attach the middle sheet 75 to the back sheet 71. Top sheet 78, with opening 79 is folded along line 82 to be fixed on top of middle sheet 75. Top sheet 78 may also include one or more glue regions, such as region 80. Flap 74 may be of a reduced size, so as to only extend horizontally across the pocket region.

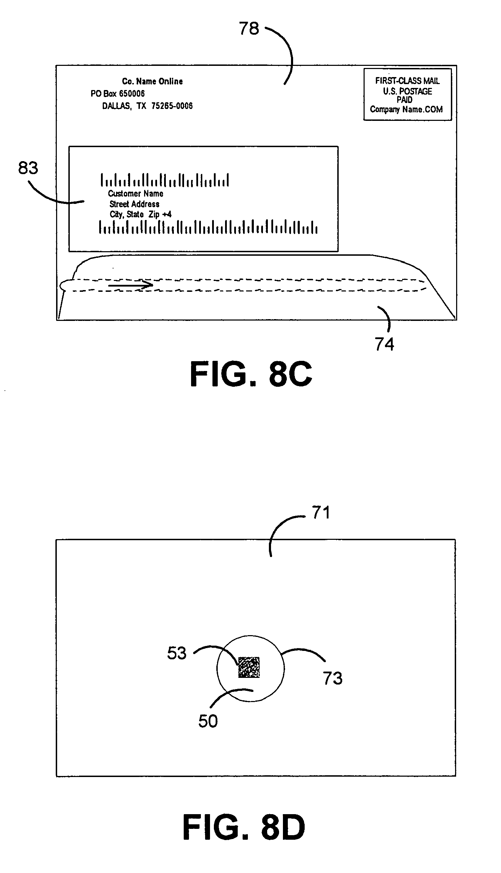

Figs. 8A depicts a partially constructed mailer similar to that shown in Fig. 7. In Fig. 8A the return delivery address region 21 has been left blank on the middle sheet 20. Also, the opening 61 has taken the place where normally an outgoing delivery address would have been printed. To finish mailer shown in this embodiment, a printer prints the return delivery address on the region 21 through the opening 61. The unique return address printed in region 21 may include Postnet and/or PLANET codes. Such codes can bye used by the Postal Service to track mail throughout delivery in the postal delivery system. Next, an outgoing delivery address is printed on a label 83 as depicted in Fig. 8B. The label 83 is then place on the top sheet 60 over the opening 61 as depicted in Fig. 8C. For completeness, Fig. 8D shows a rear view of the mailer with the sleeve 50 and barcode 53 showing through the opening 65.

The mailer envelope may form with paper and adhesives known in the art. As a particular example, paper and adhesive identified in co-pending U.S. Patent Application 10/937,108, Two-Way Electronic Media Mailer, filed September 9, 2004 and published on March 9, 2006 under publication No. 2006/0049069, may also be used.

Fig. 10 depicts a system for processing digital media, such as rental DVD's, that are mailed, returned, and processed for mailing again. In a preferred embodiment, the system uses the mailer envelope as described above in connection with Figs. 1-9. However, it should be understood that the system of Fig. 10 is not limited for use with such envelopes.

In the following descriptions, systems and equipment will be described for processing DVD's. For purposes of this description, the term DVD should be considered to include the sheath 50 with code 53 that encloses the actual digital media. It will also be understood that other digital media such as CD's, CD-ROM's, video game disks, or any other optical disk media, may be substituted for DVD's.

A delivery service 101 is used to transport returned DVD's 102 to distribution center 100. Delivery service 101 also receives outgoing DVD's 111 from the distribution center 100. The delivery service 101 may be a government postal service, or a private delivery service. An objective of the invention is to process returned DVD's 102 as quickly as possible in order to prepare outgoing mail 111 for delivery service 101 pickup in the same day, or even within a few hours.

Within the distribution center 100, returned, or incoming, DVD's 102 are placed in a scanning/sorting machine 103. If preferred envelopes, such as those described in connection with Figs. 1-9, are used then there is no need to remove the DVD's from their envelopes for initial stages of processing. The incoming DVD's may typically run through the sorting machine 103 twice. In a first pass, the incoming DVD packages are scanned to determine the contents of the returned DVD's 102. In a preferred embodiment, the sorting machine 103 scans a barcode 53 through an opening 73 or 76 as depicted in Figs. 9A and 9B.

The sorting machine 103 is coupled to a server computer 106 which in turn has access to customer data 109. Based on the scanned barcode 53 information received from the sorter 103, the server computer 106 can identify what DVD has been returned and who the sender was.

Under a business model that may be supported by distribution center 100, the sender customer is entitled to receive another DVD, now that a first one has been returned. The server computer 106 determines what next DVD should be sent to the customer. This determination can be based customer preferences (including lists of desired DVD's) stored in customer data 109. Also, the presence or absence of desired DVD's, as determined from the list of returned DVD's received from the sorting machine 103, and/or from inventory 105 records, may be used to determine what next DVD will be sent.

After determining what DVD's need to be sent to one or more customers, server computer 106 provides a list of needed outgoing DVD's back to the sorting machine 103. The incoming returned DVD's 102 are then sorted based on that list. DVD's that are needed to satisfy customer requests are sorted as outgoing DVD's 107 to be provided to the inserter equipment 110. DVD's that are not needed to satisfy outgoing customer requests may be sorted as restock DVD's to be placed into an inventory system 105. In an alternative embodiment, inventory system 105 may be coupled to a network including multiple distribution centers 100. Based on the needs at different distribution centers 100, DVD's can also be sorted into groups to be provided to a distribution center 100 at a different location. Since incoming DVD's may not be sufficient to satisfy all outgoing needs, server computer 106 identifies inventory DVD's 108 to be transported from DVD inventory 105 to inserter equipment 110.

Inserter equipment 110 is capable of receiving the DVD's 107 and 108 in any order. Inserter 110 is arranged to place the DVD's in appropriate envelopes, to address the envelopes, and to provide the filled addressed envelopes for the outgoing DVD's 111 to the delivery service 101. For each outgoing DVD, inserter equipment 110 receives the appropriate address information from server computer 106. A list of DVD's and corresponding recipients may be stored locally at the inserter 110 for use in the addressing process. Inserter 110 further reports back to server computer 106 the status of DVD's that are prepared for delivery.

In one alternative embodiment, DVD's stored in inventory 105 are pre-inserted into envelopes. That way, DVD's 108 retrieved from inventory may skip the mechanical inserting step on inserter 110. Instead the filled envelopes can be fed onto a portion of the inserter 110 that is upstream of the addressing mechanism. Inventory DVD's may be mechanically inserted into blank envelopes, such as on inserter 110. Alternatively, DVD's can be manually placed into envelopes prior to placement in inventory 105. Because updating the inventory 105 is less time sensitive than preparing outbound DVD's, the manual insertion process for inventory items may be acceptable.

In a preferred embodiment, restock DVD's 104 and outgoing DVD's 107 are manually inspected for damage. Damaged DVD's are rescanned and the server computer 106 is updated to indicate which DVD's are damaged, and to adjust the DVD processing plans accordingly.

In a further embodiment, the delivery service 101 can provide advance notice to the distribution center 100 that a returned DVD 102 is on the way before it arrives at the distribution center. This embodiment takes advantage of unique identifier information printed on the return address region 21 of the return mail piece. (See Fig. 9A). In particular, such unique identifier information is Postnet or PLANET code information that is usable by the U.S. Postal Service (as delivery service 101) to provide tracking information on the mail piece. Using the USPS Confirm system, a subscriber (the distribution center 100) can enter the unique mail piece identifier number into the system to receive tracking information. This allows the distribution center 100 to predict when the return DVD 102 will be arriving. Thus, the distribution center may choose to release a customer's next DVD for shipment, even before the return DVD 102 has been received. This method can be used to further shorten the time that a rental customer must wait to receive their next movie from their request list.

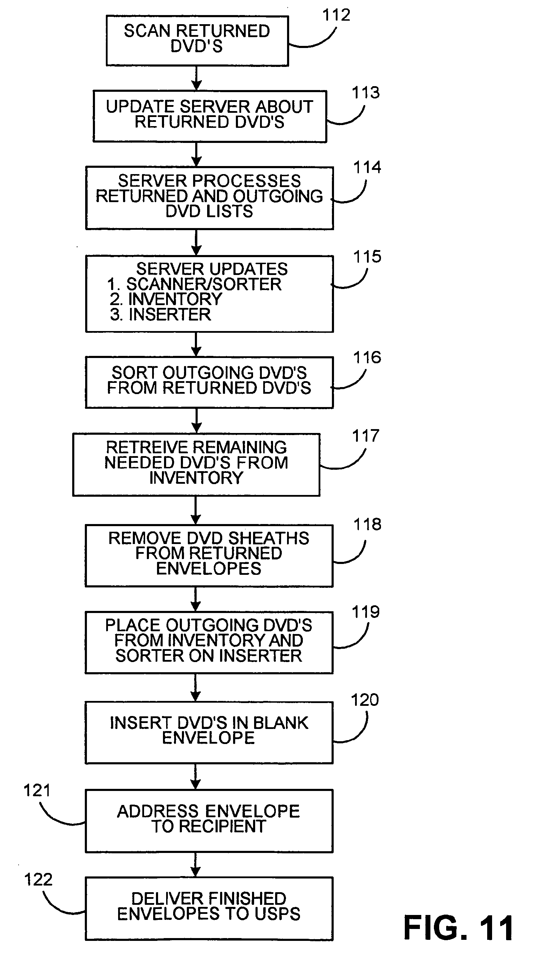

Fig. 11 depicts an exemplary flow chart of steps used for processing DVD's in distribution center 100. The steps are depicted in an exemplary order, and do not necessarily need to occur in the same order as depicted. At step 112 codes on the returned DVD's are scanned to determine (1) what DVD has been returned, and (2) the identity of the customer returning the DVD. Information regarding the returned DVD's is supplied to the server computer 106 at step 114. In addition to the sorter 103, the server 106 is coupled to, and provide updates to, a DVD inventory system 105 and inserter equipment 110 (step 115).

At step 115, the sorter 103 is provided with an update on which DVD's are needed to satisfy outgoing DVD requests. The inventory 105 is updated to indicated the status of the DVD's in the system, including what DVD's will be returned from the sorter 103 to inventory 105, and which DVD's need to be removed from inventory to satisfy outgoing DVD requests. The inserter 110 is also updated by server computer 106 with information about which outgoing DVD is to be addressed to which recipient. Updates may be done in the form of files transferred from server computer 106 to be used locally, or information may be exchanged between the devices and server computer 106 on an as-needed basis.

At step 116, sorter 103 sorts outgoing DVD's 107, as determined in step 114, from the returned DVD's 102. Also, at step 117, any remaining DVD's to satisfy outgoing demand are retrieved from inventory 105.

At step 118, DVD's (with their sheaths 50) are removed from the returned DVD envelopes. The outgoing DVD's 107 and 108 are then provided to inserter 110 at step 119. At step 120, the inserter mechanically inserts the DVD's into blank envelopes, preferably of the type described in Figs. 1-9. At step 121, the inserter 110 places the appropriate recipient address on the filled envelope, in accordance with the recipient of the DVD as determined by the server computer 106. Finally, the delivery service 101 receives the finished outgoing DVD mailings for delivery at step 122.

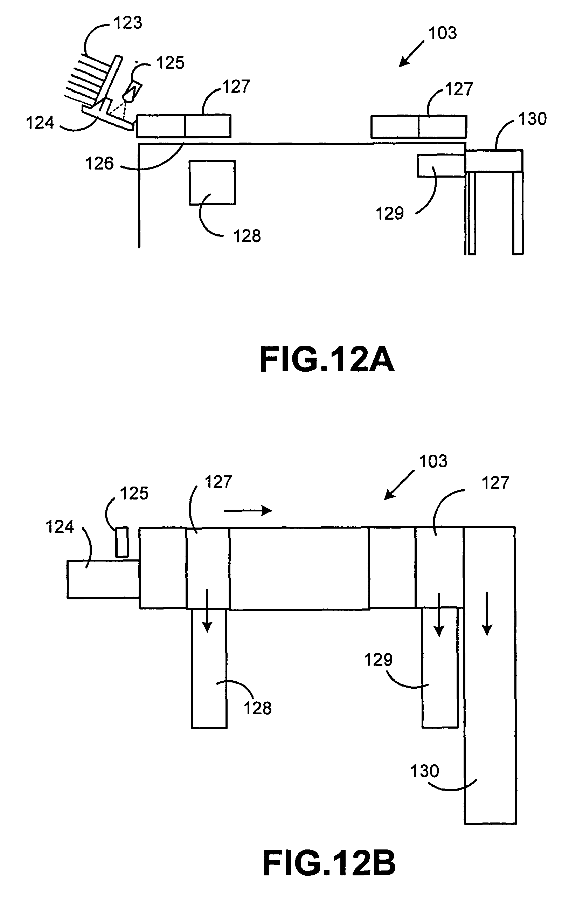

Fig. 12A and 12B depict a side and top view of sorter machine 103. Incoming DVD envelopes 123 are placed in a feeder 124. If the preferred envelopes have been used, then the DVD codes should be visible through windows on either side of the envelope. A scanner camera 125 scans codes from the DVD envelopes 123 as they are fed to the sorter deck 126. Envelopes 123 are then transported along the length of deck 126. In this embodiment, if the camera 125 cannot properly read the envelope, the envelope is diverted at divert module 127 into divert bin 128. Unreadable envelopes may be processed by hand, or repaired and placed back in the feeder 124.

At the end of the sorter 103, a stacking device 130 is positioned to stack the processed DVD envelopes. When operated in the preferred embodiment described in connection with Figs. 10 and 11, stacking device 130 will receive all of the successfully scanned envelopes 123 during the first pass on the machine. This first pass is used to determine what DVD's are in the incoming stack of envelopes 123, and to determine customers who will need new DVD's. On the second pass, stacker 130 is preferably used to receive the sorted envelopes that have been identified to be transferred to inserter 110 for outbound processing. A second divert bin 129 is also used for second pass processing, and this bin is used to receive DVD's that are going to be sent to inventory.

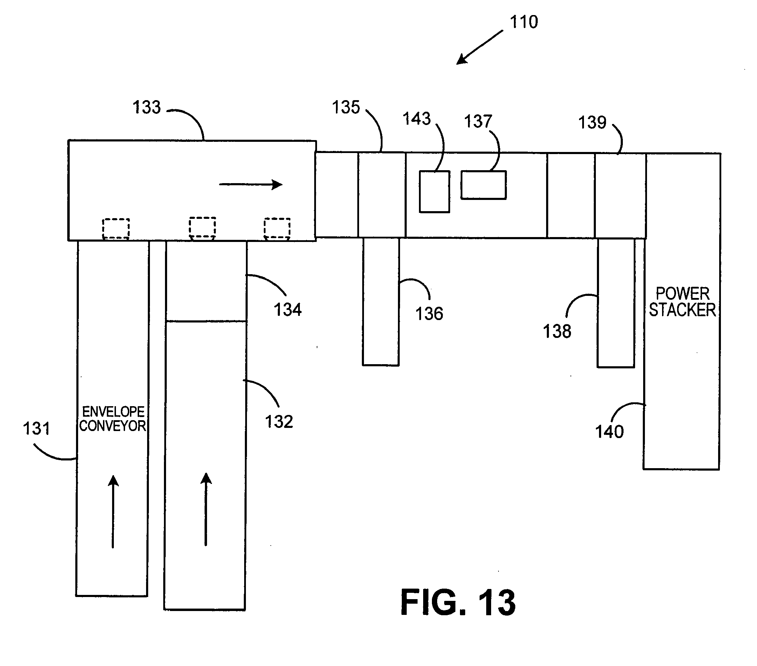

Fig. 13 depicts an inserter machine 110 in an arrangement suitable for inserting DVD's into envelopes having a configuration such as depicted in Fig. 4. Inserter machine 110 may preferably be a Flowmaster FX14 inserter machine, available from Pitney Bowes Inc., and configured as described herein. A suitable inserter machine is also described in U.S. Patent 6,164,046, to Werner, and assigned to the assignee of the present application.

An envelope conveyor 131 receives empty envelopes to be filled with DVD's. As mentioned above, these empty envelopes may be configured as shown in Fig. 4. DVD's (again, in their sheaths) received from the sorter 103 and/or from inventory 105 are placed on a conveyor 132 to be transported to insert station 134. Envelopes are transported from the envelope conveyor 131 on insert deck 133. When an envelope is positioned at the base of the insert station 134 a DVD is inserted into the envelope. Then the filled envelope is transported downstream, off the insert deck 133.

Downstream of the insert deck 133 is an optional mechanism for transferring pre-enveloped DVD's into the system. As discussed above, DVD's from the inventory 105 may be pre-inserted into empty envelopes. Such pre-filled envelopes are placed on a conveyor 136 that leads to a feeder 135 that places the pre-filled envelopes on the inserter transport.

Further downstream, a camera 143 scans the code on the DVD to determine what DVD is being processed. Based on the DVD identification, the appropriate recipient and recipient address are matched based on the information received from the server computer 106. The appropriate recipient name and address are then printed on the envelope with a printer 137. Referring to Fig. 4, the recipient information would be printed in area designated 41. Printer 137 preferably includes a dryer device to dry the ink to allow faster processing.

Camera 143 may be of any commercial sort that can read codes. For example, for reading 2D data matrix barcodes, Cognex Corp., of Natick, Massachusetts, United States of America and Vitek Industrial Video Products of Sun Valley, California, United States of America, make suitable cameras. Suitable printers are also known in the art, such as those available from Kodak Versamark of Dayton, Ohio, United States of America.

An error scanner is placed at diverter location 139 to detect improperly processed envelopes, and to divert them into exception diverter bin 138. Diverter 139 sends a list of exception pieces to the server computer 106 so that it is known what pieces need additional processing. Finished mail pieces are stacked on power stacker 140 in preparation for transfer to the delivery service 101.

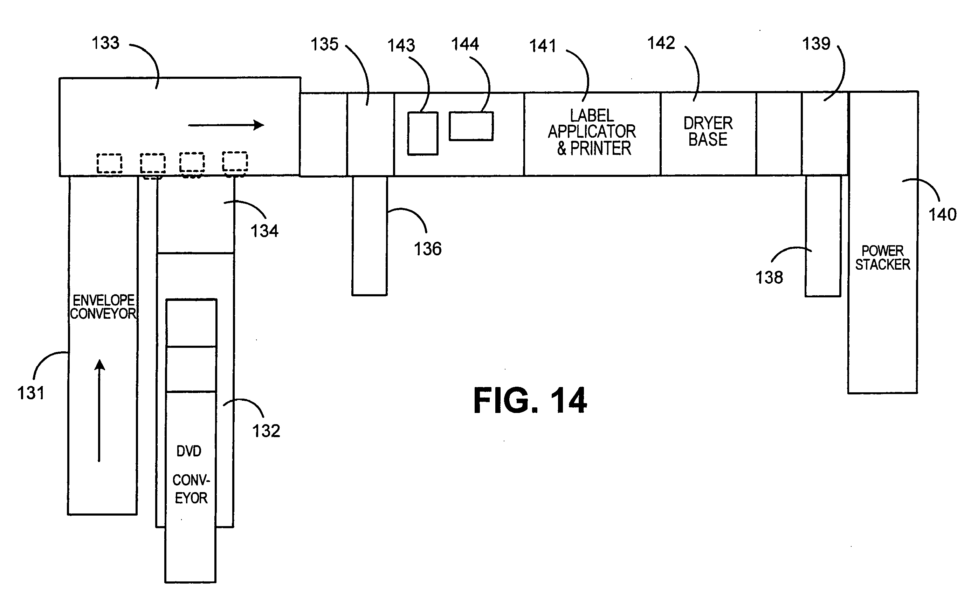

Fig. 14 depicts an alternative embodiment of an inserter 110 that is suitable for use with an envelope mailer arrangement as depicted in Figs. 8A-8D. This inserter is arranged to print a return address in area 21 on the return envelope sheet. The return address is printed in are 21 by printer 144, downstream of camera 143. Next, a label applicator and printer 141 is used to print a label as shown in Fig. 8B, and applied as shown in Fig. 8C. An additional dryer 142 is located downstream of applicator/printer 141 to dry the ink on the label to allow faster processing.

Although the invention has been described with respect to preferred embodiments thereof, it will be understood by those skilled in the art that the foregoing and various other changes, omissions and deviations in the form and detail thereof may be made without departing from the spirit and scope of this invention.

## Claims

1. A method for preparing digital media for delivery, the method comprising:
supplying empty envelopes;
supplying outgoing digital media;
inserting outgoing digital media into the empty envelopes;
scanning a code on the digital media;
determining an intended delivery address for the digital media based on the scanned code; and
applying delivery address information, as determined from the scanned code, to envelopes used to contain the digital media.

2. The method for preparing digital media for delivery of claim 1 wherein the step of applying delivery address information includes printing the delivery address on a label, and applying the printed label on the envelope.

3. The method for preparing digital media for delivery of claim 1 wherein the envelopes include at least one opening allowing visibility access to media inserted in the envelopes and wherein the step of scanning is after inserting, and scanning occurs through the opening in the envelopes.

4. The method for preparing digital media for delivery of claim 1 wherein the envelopes include at least one opening , wherein a business reply portion of the envelope is exposed through the opening, and wherein the step of applying delivery address information includes printing a return address on the business reply portion of the address.

5. The method for preparing digital media for delivery of claim 4 further comprising selecting the return address to be printed based on the code scanned.

6. The method for preparing digital media for delivery of claim 4 or 5 wherein the step of printing the return address includes printing unique identifier codes, the unique identifier codes being associated with the digital media.

7. The method for preparing digital media for delivery of claim 6 wherein the step of printing unique identifier codes includes printing PLANET codes or Postnet codes proximal to the return address.

8. The method for preparing digital media for delivery of any preceding claim further comprising a step of outsorting the digital media based on the code scanned.

9. The method for preparing digital media for delivery of any preceding claim wherein the method further comprises steps for sorting incoming digital media to separate outgoing digital media to be supplied as the outgoing digital media, the incoming sorting steps comprising:
feeding incoming digital media;
scanning incoming digital media to read the code on the incoming digital media from the fed incoming digital;
identifying senders of the incoming digital media and identifications of the incoming digital media based on the code scanned and identifying outgoing digital media requested by the senders and to identify which of the outgoing digital media are included within the scanned incoming digital media; and
sorting the digital media to separate digital media identified as requested outgoing digital media from the incoming digital media, whereby the sorted outgoing digital media used in the step of supplying outgoing digital media.

10. The method for preparing digital media for delivery of claim 9 wherein the step scanning the incoming digital media includes scanning without opening an envelope containing the incoming digital media.

11. The method for preparing digital media for delivery of claim 9 or 10 wherein the method further comprises inventorying the digital media whereby digital media that are not identified as requested outgoing digital media are placed in inventory.

12. The method for preparing digital media for delivery of claim 11 wherein the step of inventorying further provides outgoing digital media for the step of supplying outgoing digital media.

13. The method for preparing digital media for delivery of any one of claims 9 to 12 wherein the step of incoming sorting further includes opening envelopes to facilitate removal of outgoing digital media from incoming envelopes.

14. The method for preparing digital media for delivery of any one of claims 9 to 12 further comprising:
storing customer data, including customer requests for particular digital media;
identifying what incoming digital media has been returned to determine which of the incoming digital media needs to be used as outgoing digital media;
identifying particular customers to receive the outgoing digital media; and
preparing digital media for delivery to the particular customers.

15. The method for preparing digital media for delivery of claim 14 further comprising a step of determining what incoming digital media are to be transferred to inventory, and which inventoried digital media are to be used for the step of supplying outgoing digital media.

16. A system for preparing digital media for delivery, the system comprising:
an inserter machine for inserting digital media in envelopes, the digital media inserter machine comprising:
an envelope supply mechanism;
an outgoing digital media supply mechanism;
an insert station arranged to insert digital media from the digital media supply mechanism into empty envelopes provided from the envelope supply mechanism;
a scanner arranged to scan a code on the digital media, the code being used to determine an intended delivery address for the digital media; and
a printer mechanism arranged to apply delivery address information, as determined from the scanned code, to the envelope.

17. The system for preparing digital media for delivery of claim 16 wherein the printer mechanism comprises a label printer for printing the delivery address on a label, and a label applicator for applying the printed label on the envelope.

18. The system for preparing digital media for delivery of claim 16 wherein the envelopes include at least one opening allowing visibility access to media inserted in the envelopes and wherein the scanner is located downstream of the insert station and is positioned to scan the code on the digital media through the opening in the envelopes.

19. The system for preparing digital media for delivery of claim 16 wherein the envelopes include at least one opening, wherein a business reply portion of the envelope is exposed through the opening, the inserter machine further comprising a second printer mechanism for printing a return address on the business reply portion of the address.

20. The system for preparing digital media for delivery of claim 19 wherein the return address to be printed by the second printer mechanism is selected based on the code scanned by the scanner.

21. The system for preparing digital media for delivery of any one of claims 16 to 20 wherein the inserter machine further comprises an outsort mechanism for outsorting the digital media, the outsorting being controlled based on the code scanned by the scanner.

22. The system for preparing digital media for delivery of any one of claims 16 to 21 wherein the system further comprises an incoming sorting machine, the incoming sorting machine being arranged to sort incoming digital media to separate outgoing digital media to be provided to the outgoing digital media supply mechanism of the inserter machine, the incoming sorting mechanism comprising:
an incoming digital media feeder;
an incoming digital media scanner for reading the code on the incoming digital media from the incoming digital media feeder;
a computer for identifying senders of the incoming digital media and identifications of the incoming digital media based on the code scanned by the incoming digital media scanner, the computer further programmed to identify outgoing digital media requested by the senders and to identify which of the outgoing digital media are included within the scanned incoming digital media; and
a sorter device for sorting the digital media to separate digital media identified as requested outgoing digital media from the incoming digital media, whereby the sorted outgoing digital media can be provided to the outgoing digital media supply mechanism of the inserter machine.

23. The system for preparing digital media for delivery of claim 22 wherein the incoming digital media scanner is arranged to scan the incoming digital media without opening an envelope containing the incoming digital media.

24. The system for preparing digital media for delivery of claim 22 or 23 wherein the system further comprises a digital media inventory system, and whereby digital media that are not identified as requested outgoing digital media can be placed in the inventory system.

25. The system for preparing digital media for delivery of claim 24 wherein the inventory system further provides outgoing digital media for the outgoing digital media supply mechanism of the digital media inserter machine.

26. The system for preparing digital media for delivery of any one of claims 22 to 24 wherein the incoming sorting mechanism further includes an envelope opener facilitating removal of outgoing digital media from incoming envelopes.

27. The system for preparing digital media for delivery of any one of claims 22 to 26 further comprising a computer system coupled to the digital media inserter machine and to the incoming sorting mechanism, the computer system being arranged for storing customer data, including customer requests for particular digital media to be delivered, the computer system being arranged to control operation of the digital media inserter machine and the incoming sorting mechanism to identify what digital media has been returned, to determine what digital media needs to be sent to particular customers, and being arranged to prepare digital media for delivery to the particular customers via the digital media inserter system.

28. The system for preparing digital media for delivery of claim 27 wherein the computer system is further coupled to a digital media inventory system and the computer system is arranged to determine, what digital media are to be transferred from the incoming sorting mechanism to the inventory system, and which digital media are to be transferred from the inventory system to the inserter machine.
